Europäisches Patentamt

European Patent Office

. Office européen des brevets

(19)

(11) Veröffentlichungsnummer: **0 047 381**
**B1**

(12) # EUROPÄISCHE PATENTSCHRIFT

(45) Veröffentlichungstag der Patentschrift:
14.03.84

(21) Anmeldenummer: 81105677.9

(22) Anmeldetag: 20.07.81

(51) Int. Cl.³: **C 08 F 8/12**, C 08 F 20/44,
E 21 B 21/00

(54) Verfahren zur Herstellung wasserlöslicher Hydrolyseprodukte von Polyacrylnitrilpolymerisaten und deren Verwendung als Bohrspülmittel.

(30) Priorität: 31.07.80 DE 3029027

(43) Veröffentlichungstag der Anmeldung:
17.03.82 Patentblatt 82/11

(45) Bekanntmachung des Hinweises auf die Patenterteilung:
14.03.84 Patentblatt 84/11

(84) Benannte·Vertragsstaaten:
BE DE FR GB NL

(56) Entgegenhaltungen:
DE - A - 2 031 972
GB - A - 1 104 567
US - A - 3 419 502

(73) Patentinhaber: Wolff Walsrode Aktiengesellschaft,
Postfach, D-3030 Walsrode 1 (DE)

(72) Erfinder: Huhn, Helmut, Dr., Nordsunderberg 13,
D-3030 Walsrode (DE)
Erfinder: Karstens, Werner, Ing. Grad., Kirchstrasse 5,
D-3036 Bomlitz (DE)
Erfinder: Hoppe, Lutz, Dr., Am Badeteich 8,
D-3030 Walsrode (DE)

(74) Vertreter: Kutzenberger, Helga, Dr. et al, c/o Bayer AG
Zentralbereich Patente Marken und Lizenzen,
D-5090 Leverkusen 1, Bayerwerk (DE)

# 0 047 381

### Verfahren zur Herstellung wasserlöslicher Hydrolyseprodukte von Polyacrylnitrilpolymerisaten und deren Verwendung als Bohrspülmittel

Die vorliegende Erfindung betrifft Verfahren zur Herstellung von Polyacrylnitrilpolymerisaten durch Polymerisation von Acrylnitril und gegebenenfalls weiteren Monomeren in Gegenwart von hydrolysierten Polyacrylnitril und anschließender Hydrolyse des Polymerisationsproduktes ohne Zwischenisolierung.

Aus der DE-PS 1 207 086 ist ein Verfahren zur Herstellung von Hydrolyseprodukten des Polyacrylnitrils bekannt, wobei Polyacrylnitrilpulver oder -fasern zu Produkten hydrolysiert werden, die keine Nitrilgruppen mehr enthalten. Voraussetzung für den Erhalt von homogenen Polyacrylnitrilhydrolysaten ist die Feinheit des eingesetzten Polyacrylnitrils. Bei grobkörnigen oder faserigen Polyacrylnitrilen ist vor der Hydrolyse eine Zerkleinerung erforderlich.

Gemäß der Lehre der DOS 2 031 972 sind für bestimmte Anwendungsfälle Hydrolyseprodukte des Polyacrylnitrils, wie z. B. als Schutzkolloid für wasserbasische Tiefbohrspülungen, ein bestimmter Gehalt an nichthydrolysierten Nitrilgruppen erforderlich. Auch bei diesem Verfahren ist eine Zerkleinerung des Polymerisats vor der Hydrolyse notwendig.

Bei Einsatz von Polyacrylnitrilpolymerisaten, die durch Emulsionspolymerisation hergestellt wurden, enthalten die Hydrolysate Reste und/oder störende Abbauprodukte des Emulgators, die durch starkes Schäumen die Herstellung und Verarbeitung der Polyacrylnitrilhydrolysate erschweren und einschränken.

Die bekannten Verfahren zur Herstellung von Hydrolysaten von Polyacrylnitril haben daher den Nachteil, daß das Polyacrylnitril in gesonderten Verfahrensschritten hergestellt, isoliert und gereinigt werden muß, um ein Hydrolysat zu erhalten, daß insbesondere den gewünschten Anforderungen genügt.

Hieraus ergibt sich die Aufgabe, ein kostengünstiges und umweltfreundliches Verfahren zu entwikkeln, das Hydrolyseprodukte des Polyacrylnitrils liefert, die insbesondere den Qualitätsanforderungen zum Einsatz als Schutzkolloid, Veredlungsmittel für Celluloseprodukte und/oder Ausgangsprodukte für Klebstoffe und Leimungsmittel gerecht werden.

Erfindungsgemäß gelingt dies, indem man ein Acrylnitrilpolymerisat herstellt, das ohne weitere Reinigung oder mechanische Bearbeitung ein optimales Ausgangsprodukt für die sich anschließende Hydrolyse darstellt.

Gegenstand der Erfindung sind daher Verfahren zur Herstellung von wasserlöslichen Hydrolyseprodukten von Acrylnitrilhomo- und/oder -copolymerisaten durch Polymerisation von Acrylnitril und gegebenenfalls weiteren Monomeren in wäßrigen Medien, die dadurch gekennzeichnet sind, daß man die Polymerisation bei Temperaturen von 35—80° C unter Zusatz von 1—8, vorzugsweise 4—6 Gew.-%, bezogen auf die zu polymerisierenden Monomeren, eines hydrolysierten Acrylnitrilhomo- und/oder -copolymerisats mit einer Grenzviskositätszahl $[\eta]$ von 0,8—2,5 dl/g durchführt und das Polymerisat ohne Isolierung nach bekannten Methoden hydrolysiert.

Das Acrylnitril und gegebenenfalls weitere Monomere, vorzugsweise Monovinylverbindungen wie Acrylsäureester, Methacrylsäureester, Maleinsäureester oder Substitutionsprodukte des Acrylnitrils werden vorzugsweise nach bekannten Suspensionspolymerisationsmethoden polymerisiert. Dabei sollte die Menge organischer Substanzen im wäßrigen Medium 20—50 Gew.-%, vorzugsweise 30—40 Gew.-% betragen. Durch die Zugabe von hydrolysierten Acrylnitrilhomo- und/oder -copolymerisaten — vorzugsweise solchen, die bei dem erfindungsgemäßen Verfahren gebildet werden — als Emulgatoren, werden alle störenden Nebenprodukte vermieden, und das Polymerisat kann ohne Isolierung weiterverarbeitet werden. Bei der Polymerisation können auch noch 1—8 Gew.-% Isopropanol, bezogen auf die Monomeren, zugegeben werden.

Insbesondere ist diese Zugabe bei der Herstellung des beim erfindungsgemäßen Verfahren verwendeten Schutzkolloids empfehlenswert. Das Schutzkolloid sollte vorzugsweise folgenden Aufbau haben:

Hydrolysiertes Acrylnitrilhomo- und/oder -copolymerisat, bestehend aus

45—60 Gew.-% Ammoniumacrylateinheiten
40—55 Gew.-% Acrylsäureamideinheiten

mit einer Grenzviskositätszahl $[\eta]$ von 1—2 dl/g, vorzugsweise 1,5 dl/g.

Zur Beschleunigung der Hydrolysereaktion, die vorzugsweise bei 180—200° C durchgeführt wird, können gegebenenfalls 0,1—3% anorganische Salze, wie wasserlösliche Carbonate, Phosphate, Borate, die durch Hydrolyse basische Wirkung zeigen, und/oder Harnstoff und/oder Harnstoffderivate, verwendet werden. Bei der Hydrolyse sollte die Konzentration des Polymerisats in Wasser 10—30 Gew.-% betragen. Die Hydrolyse wird vorzugsweise so weit geführt, daß das Polyacrylnitril vollständig hydrolysiert wird. Es ist aber auch möglich, Hydrolysate mit 70—30% Acrylsäure-, 30—70% Acrylsäureamid- und 0,1—20% Acrylnitril-Einheiten herzustellen, die sich besonders als Bohrspülmittel eignen.

Man kann die erfindungsgemäß hergestellten wäßrigen homogenen Polyacrylhydrolysate auch

**0 047 381**

mittels Trockner, wie Walzentrockner, vom Wasser befreien. In diesem Falle wird ein gut rieselfähiges, schwachgelbes Trockenprodukt erhalten, das sich für die bekannten Anwendungszwecke eignet.

Beispiel 1

In einen für 30 bar Druck ausgelegten, 500 l fassenden, mit Rührwerk versehenen Autoklaven werden

175,0 kg  Wasser
0,95 kg  Polyacrylnitrilhydrolysat mit 31,7 Gew.-% COOH-Gruppen berechnet als Polyacrylsäure = 54 Gew.-%
5,7 kg  Acrylnitril
0,3 kg  Methylacrylat

vorgelegt und nach Verschließen des Autoklaven unter Stickstoff als Schutzgas und Rühren auf 60° C aufgeheizt. Anschließend werden über eine Druckschleuse 0,15 kg Ammoniumpersulfat und 0,15 kg Natriumpyrosulfit in je 3 l Wasser zugegeben. Nach 10 Minuten werden die Substanzgemische I, II und III kontinuierlich und gleichzeitig dem Autoklaven zugeschleust und die Temperatur des Autoklaveninhalts bei 60° C gehalten.

Substanzgemisch I:
   51,3 kg Acrylnitril
   2,7 kg Methylacrylat
Substanzgemisch II:
   27,0 kg Wasser
   0,3 kg Ammoniumpersulfat
Substanzgemisch III:
   27,0 kg Wasser
   0,3 kg Natriumpyrosulfit
   8,55 kg Polyacrylnitrilhydrolysat, 31,7gew.-%ig
COOH-Gruppen berechnet als Polyacrylsäure = 54 Gew.-%.

Nach der Zuschleusung beläßt man das Reaktionsgemisch noch 2 Stunden bei 60° C. Anschließend wird die Temperatur des Autoklaveninhalts auf 195° C gesteigert und nach Beginn der Hydrolyse durch Abdestillieren mit einer Abkühlgeschwindigkeit von 5° C/30 min auf 180° C gesenkt. Nach weiteren 60 Minuten bei 180° C wird das Fortschreiten der Hydrolyse durch Probenahme beobachtet. Durch Viskositätsmessung der Proben mit dem Viskotester VT 24 (Firma Haake) bei 80° C wird der Viskositätsverlauf in ein vorbereitetes Viskosität/Reaktionszeit-Diagramm eingetragen. Beim Erreichen der gewünschten Viskosität wird abdestilliert und weiter gekühlt. Bei 90° C wird das abdestillierte Wasser ergänzt und der Ansatz kann nach Kühlung auf 30° C abgelassen werden. Das erhaltene klare, strohgelbe Produkt besitzt folgende Analysendaten:

| | |
|---|---|
| Feststoffgehalt | 30 Gew.-% |
| pH-Wert | 6,4 |
| Viskosität n. Höppler (25° C) | 7300 m Ps |
| Rel. Viskosität $\eta$ rel | 2,30 |
| Carboxylgruppengehalt | |
| ber. als polymere Acrylsäure | 40 Gew.-% von Feststoff |
| Restmonomeres AN | <1 ppm (nicht nachweisbar) |
| Nitrilgruppen | im IR-Spektrum bei 2240 cm$^{-1}$ deutlich nachweisbar |

Beispiel 2

Es wird wie im Beispiel 1 beschrieben ein Hydrolyseprodukt hergestellt mit dem Unterschied, daß 2,1 kg Isopropanol zusätzlich im Autoklaven vorgelegt wurden. Das erhaltene klare, strohgelbe Produkt besitzt folgende Analysendaten:

| | |
|---|---|
| Feststoffgehalt | 30 Gew.-% |
| pH-Wert | 6,7 |
| Viskosität n. Höppler (25° C) | 2350 m Ps |
| Rel. Viskosität $\eta$ rel | 1,80 |

3

Carboxylgruppengehalt
ber. als polym. Acrylsäure      41 Gew.-% vom Feststoff
Restmonomeres AN      <1 ppm (nicht nachweisbar)
Nitrilgruppen      im IR-Spektrum bei 2240 cm$^{-1}$ nachweisbar

Zur Überprüfung der Wirksamkeit des als Schutzkolloid eingesetzten Polyacrylnitrilhydrolysates wurde bei den Beispielen 4 und 5 das im Beispiel 1 beschriebene Verfahren vor dem Aufheizen von 60° C auf 195° C unterbrochen und das Polymerisationsprodukt untersucht.

## Beispiel 3

In diesem Beispiel soll gezeigt werden, wie Polyacrylnitrilhydrolysate mit erniedrigten Viskositäten und höheren Gehalten an Carboxylgruppen, berechnet als Acrylsäure, erfindungsgemäß erhalten werden.

Verfahren wird wie im Beispiel 1 beschrieben, mit dem Unterschied, daß 3,5 kg Isopropanol zusätzlich im Autoklaven vorgelegt wurden. Im Gegensatz zu Beispiel 1 wird der Ansatz so lange hydrolysiert, bis sich bei zwei im Abstand von 15 Min. gezogenen Proben die Viskosität bei 80° C nicht mehr ändert. Dann wird der Ansatz noch 2 Stunden bei 180° C gehalten und anschließend gekühlt. Das erhaltene strohgelbe Produkt besitzt folgende Analysendaten:

Feststoffgehalt      35 Gew.-%
pH-Wert      6,8
Viskosität n. Höppler 25° C      2050 m Ps
Rel. Viskosität $\eta$ rel      1,71
Carboxylgruppengehalt
ber. als polym. Acrylsäure      50 Gew.-% vom Feststoff
Restmonomeres AN      <1 ppm (nicht nachweisbar)
Nitrilgruppen      im IR-Spektrum nicht nachweisbar

## Beispiel 4
### (Vergleich)

In einem 15 l fassenden, mit Rührwerk versehenen Autoklaven werden

     4000 g Wasser
     380 g Acrylnitril

vorgelegt und nach Verschleißen des Autoklaven unter Stickstoff als Schutzgas und Rühren auf 60° C aufgeheizt.

Anschließend werden über eine Druckschleuse 10 g Ammoniumpersulfat und 10 g Natriumpyrosulfit in je 100 ml Wasser zugegeben.

10 Minuten nach erfolgter Zugabe werden die Substanzgemische I, II und III kontinuierlich und gleichzeitig dem Autoklaven zugeschleust und die Temperatur des Autoklaveninhalts bei 60° C gehalten.

Substanzgemisch I:
     3420 g Acrylnitril
     180 g Methylacrylat
Substanzgemisch II:
     900 g Wasser
     10 g Ammoniumpersulfat
Substanzgemisch III:
     900 g Wasser
     10 g Natriumpyrosulfit

Nach Zuschleusung beläßt man das Reaktionsgemisch noch 2 Stunden bei 60° C. Das Polymerisationsprodukt wird nach Kühlung auf 20° C abgelassen. Das erhaltene Produkt enthielt sich abscheidende Monomerensubstanz und grobkörniges Granulat. Die Ausbeute betrug nur ca. 80% und ist ohne mechanische Zerkleinerung für die Hydrolyse wenig geeignet.

## Beispiel 5

Es wurde wie im Beispiel 4 verfahren mit dem Unterschied, daß in die Autoklavenvorlage 50 g und in die Dosierung III 465 g 38,8gew.-%iges Polyacrylnitrilhydrolysat, mit einem Gehalt an polymerer Acrylsäure von 55 Gew.-% erfindungsgemäß hergestellt aus einem Polyacrylnitril mit einer Grenzviskositätszahl von 1,56 dl/g, gegeben wurde.

0 047 381

Das erhaltene Produkt war eine feine, weiße Suspension mit einer Auslaufzeit von 55 sek (Fordbecher, 4 mm Ø) und einer Ausbeute von 99,5% und eignet sich nach entsprechender Verdünnung mit Wasser für die Hydrolysatherstellung ausgezeichnet.

Die relative Viskosität der wäßrigen Lösung der erfindungsgemäßen Produkte wurde in einem Ubbelohde-Viskosimeter mittels vergleichender Durchlaufgeschwindigkeit entsprechender Lösungen bei 25° C ermittelt. Als Vergleichslösung diente eine 2-normale Natriumnitrat-Lösung, als Prüflösung eine 1 Gew.-% Polymerlösung in 2-normale Natriumnitratlösung.

Der COOH-Gruppengehalt, berechnet als polymere Acrylsäure, wurde mittels konduktometrischer Titration ermittelt. Zur Bestimmung des gesamten Gehaltes an polymerer Acrylsäure wie angegeben (nicht neutralisierte Polyacrylsäure und Ammoniumpolyacrylat) wurde NaOH als Titrator verwendet.

Die Bestimmung des Restmonomerengehaltes erfolgte gaschromatographisch.

Die Ab- und Anwesenheit von Nitrilgruppen wurde in einem Infrarot-Prüfapparat untersucht.

Zur Bestimmung der Grenzviskosität [$\eta$] wurde das Polymerisat ausgefroren, getrocknet und in Dimethylformamid gelöst. Nach Abtrennen der unlöslichen Anteile, die als für die Polymerisation eingesetztes Polyacrylnitrilhydrolysat identifiziert wurden, führte man die Bestimmung bei 25° C durch. Zur Definition der Grenzviskosität siehe: H.-G. Elias — Makromoleküle, Hüthig und Wepf-Verlag, Basel, Seite 265.

## Patentansprüche

1. Verfahren zur Herstellung von wasserlöslichen Hydrolyseprodukten von Acrylnitrilhomo- und/ oder -copolymerisaten durch Polymerisation von Acrylnitril und gegebenenfalls weiterer Monomeren in wäßrigen Medien, dadurch gekennzeichnet, daß man die Polymerisation bei Temperaturen von 35—80° C unter Zusatz von 1—8 Gew.-%, bezogen auf die zu polymerisierenden Monomeren, eines hydrolysierten Acrylnitrilhomo- und/oder -copolymerisats mit einer Grenzviskositätsz ahl [$\eta$] von 0,8—2,5 dl/g als Schutzkolloid durchführt und das Polymerisat ohne Isolierung nach bekannten Methoden hydrolysiert.

2. Verfahren nach Anspruch 1, dadurch gekennzeichnet, daß 4—6 Gew.-% des Schutzkolloids zugegeben werden.

3. Verfahren nach Ansprüchen 1 und 2, dadurch gekennzeichnet, daß das Schutzkolloid ein hydrolysiertes Polyacrylnitrilhomo- und/oder -copolymerisat aus 45—60 Gew.-% Ammoniumacrylateinheiten und 40—55 Gew.-% Acrylsäureamideinheiten besteht.

4. Verfahren nach Ansprüchen 1 bis 3, dadurch gekennzeichnet, daß die Grenzviskositätszahl [$\eta$] des Schutzkolloids 1—2 dl/g beträgt.

5. Verfahren nach Ansprüchen 1 bis 4, dadurch gekennzeichnet, daß als Schutzkolloid das gleiche Polymerisat verwendet wird, das bei der Polymerisation und anschließender Hydrolyse gebildet wird.

6. Verfahren nach Ansprüchen 1 bis 5, dadurch gekennzeichnet, daß das Polymerisat vollständig hydrolysiert wird.

7. Verfahren nach Ansprüchen 1 bis 6, dadurch gekennzeichnet, daß das Polymerisat bis zu einem Gehalt an 70—30 Gew.-% Acrylsäure-, 30—70 Gew.-% Acrylsäureamid- und 0,1—20 Gew.-% Acrylnitril-Einheiten, wobei die Gewichtsprozente jeweils 100 ergeben müssen, hydrolysiert wird.

8. Verwendung der Hydrolyseprodukte, erhältlich nach Ansprüchen 1 bis 7 als Bohrspülmittel.

## Claims

1. Process for the production of water-soluble hydrolysis products of acrylonitrile homo- and/or co-polymers by polymerising acrylonitrile and, optionally, other monomers, in aqueous media, characterised in that the polymerisation is carried out at temperatures of 35—80° C with the addition of 1—8% by weight, based on the monomers to be polymerised, of a hydrolysed acrylonitrile homo- and/or co-polymer having an intrinsic viscosity [$\eta$] of 0.8—2.5 dl/g as a protective colloid and the polymer, without being isolated, is hydrolysed by known methods.

2. Process according to Claim 1, characterised in that 4—6% by weight of the protective colloid are added.

3. Process according to Claims 1 and 2, characterised in that the protective colloid used is a hydrolysed polyacrylonitrile homo- and/or co-polymer consisting of 45—60% by weight of ammonium acrylate units and 40—55% by weight of acrylic acid amide units.

4. Process according to Claims 1 to 3, characterised in that the intrinsic viscosity [$\eta$] of the protective colloid is 1—2 dl/g.

5. Process according to Claims 1 to 4, characterised in that the protective colloid used is the same polymer which is formed during polymerisation and subsequent hydrolysis.

6. Process according to Claims 1 to 5, characterised in that the polymer is completely hydrolysed.

7. Process according to Claims 1 to 6, characterised in that the polymer is hydrolysed until it contains 70—30% by weight of acrylic acid units, 30—70% by weight of acrylic acid amide units and 0.1—20%

5

by weight of acrylonitrile units, the percentages by weight in each case having to amount to 100.

8. Use of the hydrolysis products obtainable according to Claims 1 to 7 as bore flushing compositions.

## Revendications

1. Procédé pour la fabrication de produits d'hydrolyse solubles dans l'eau d'homo- et/ou copolymères d'acrylonitrile par polymérisation d'acrylonitrile et éventuellement d'autres monomères en milieux aqueux, caractérisé en ce que l'on effectue la polymérisation à des températures de 35—80°C avec addition de 1—8% en poids, par rapport aux monomères à polymériser, d'un homo- et/ou d'un copolymère d'acrylonitrile ayant un indice de viscosité limite $[\eta]$ de 0,8—2,5 dl/g comme colloïde protecteur et on hydrolyse le polymère par des méthodes connues sans isolement.

2. Procédé selon la revendication 1, caractérisé en ce que l'on ajoute 4—6% en poids du colloïde protecteur.

3. Procédé selon les revendications 1 et 2, caractérisé en ce que le colloïde protecteur est un homopolymère et/ou un copolymère d'acrylonitrile hydrolysé consistant en 45—60% en poids de motifs acrylate d'ammonium et 40—55% en poids de motifs acrylamide.

4. Procédé selon les revendications 1 à 3, caractérisé en ce que l'indice de viscosité limite du colloïde protecteur est de 1—2 dl/g.

5. Procédé selon les revendications 1 à 4, caractérisé en ce que l'on utilise comme colloïde protecteur le même polymère qui est formé dans la polymerisation suivie d'hydrolyse.

6. Procédé selon les revendications 1 à 5, caractérisé en ce que le polymère est totalement hydrolysé.

7. Procédé selon les revendications 1 à 6, caractérisé en ce que le polymère est hydrolysé jusqu'à une teneur de 70—30% en poids de motifs d'acide acrylique, 30—70% en poids de motifs d'amide acrylique et 0,1—20% en poids de motifs d'acrylonitrile, les pourcentages pondéraux devant chaque fois donner un total de 100.

8. Utilisation des produits d'hydrolyse obtenus selon les revendication 1 à 7 comme fluides d'évacuation pour forages.